# FASCICULE DE BREVET EUROPEEN

(11) **EP 1 466 111 B1**
(45) Date de publication et mention de la délivrance du brevet: **28.12.2005**
(21) Numéro de dépôt: 03715016.6
(22) Date de dépôt: 16.01.2003
(51) Int. Cl.: F16H 55/17

(54) **PIGNON PLANETAIRE DE DIFFERENTIEL ET SON PROCEDE DE FABRICATION**
PLANETENRAD EINES DIFFERENZIALGETRIEBENS UND HERSTELLUNGSVERFAHREN DAFÜR
DIFFERENTIAL SIDE GEAR AND THE PRODUCTION METHOD THEREOF

(30) Priorité: 16.01.2002 FR 0200496
(43) Date de publication de la demande: 13.10.2004
(73) Titulaire: Ateliers Mecaniques et Industries Speciales, 03100 Montlucon (FR)
(72) Inventeur: BOSTBARGE, Guy, F-03410 DOMERAT (FR)
(74) Mandataire: Myon, Gérard Jean-Pierre
(86) Numéro de dépôt international: PCT/FR2003/000136
(87) Numéro de publication internationale: WO 2003/060351

(56) Documents cités:
- EP-A- 0 275 561
- US-A- 3 780 413
- US-A- 4 590 782

## Description

La présente invention concerne un pignon planétaire de différentiel, ainsi qu'un procédé de fabrication d'un tel pignon planétaire.

Au sens où on l'entend ici, la coquille d'un différentiel est la structure rigide dans laquelle sont montés les pignons planétaires et satellites de ce différentiel. En fonctionnement, elle reçoit le mouvement que le différentiel a pour fonction de répartir entre des arbres de transmission, et elle tourne sur elle-même.

Dans la plupart des véhicules auto-tractés, la puissance du moteur d'entraînement est transmise aux roues motrices par l'intermédiaire notamment d'une boîte de vitesses et d'un différentiel. Il est connu de monter le différentiel à l'intérieur de la boîte de vitesses, conçue en conséquence, et de prévoir que la coquille de ce différentiel n'enveloppe pas complètement les pignons planétaires et satellites, l'expression « différentiel lanterne » étant communément employée pour désigner de type de différentiels. De la sorte, tout comme les pignons de la boîte de vitesses, le différentiel et ses pignons planétaires et satellites barbotent dans l'huile que renferme le carter de cette boîte de vitesses.

Pour éviter que la boîte de vitesses ne perde de l'huile, chaque pignon planétaire peut être monté au moyen d'un palier étanche, dans une paroi du carter. Il importe alors que les pignons planétaires eux-mêmes soient également étanches. Or, un passage axial pour le logement d'un arbre de transmission débouche aux deux extrémités de chacun des pignons planétaires, afin que ces pignons puissent être traversées de part en part par une broche destinée à creuser dedans, par enlèvement de matière, des cannelures intérieures d'accouplement de l'arbre de transmission. Par conséquent, un obturateur rapporté est monté à une extrémité du passage délimité par chaque pignon planétaire, dont l'étanchéité est ainsi assurée.

Toutefois, lorsqu'un pignon planétaire ainsi constitué est produit en grande quantité, il y en a toujours quelques exemplaires dont l'étanchéité est déficiente.

Un pignon planétaire, qui remédie à cet inconvénient est envisagé dans EP-A-0 275 561, avec un trou borgne pour le logement d'une extrémité d'un arbre d'accouplement.

L'usage d'une broche pour usiner des cannelures est délicat, voire impossible dans un trou borgne.

L'invention a pour objet un pignon planétaire de différentiel, qui est pourvu de cannelures intérieures d'accouplement d'un arbre de transmission, qui comprend une denture circulaire, qui est forgé d'un seul tenant et qui délimite un trou borgne et rectiligne pour le logement et l'accouplement d'une portion d'extrémité de l'arbre de transmission, la denture circulaire et le trou borgne étant coaxiaux et centrés sur un axe de rotation du pignon planétaire, caractérisé en ce que les cannelures sont filées.

L'invention a également pour objet un procédé de fabrication d'un pignon planétaire tel que défini ci-dessus, caractérisé en ce qu'il comporte une étape dans laquelle on forme les cannelures en engageant axialement dans ledit trou borgne une filière interne, comprenant autant de dents radiales qu'il y a de cannelures à réaliser.

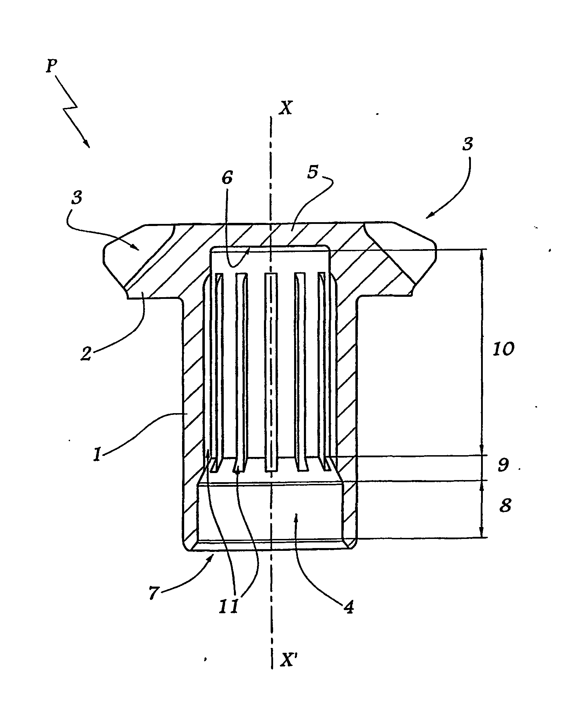

L'invention sera bien comprise à la lecture de la description qui va suivre, donnée uniquement à titre d'exemple et faite en se référant à la figure unique annexée qui est une vue en coupe axiale d'un pignon planétaire conforme à l'invention.

Ce pignon planétaire P est, pour l'essentiel, symétrique par rapport à son axe de rotation X-X'. Il comporte une portion tubulaire 1, qui se prolonge par une couronne radiale 2. Le pourtour de cette couronne radiale 2 présente la forme d'une denture conique 3, disposée selon un cercle symétrique par rapport à l'axe de rotation X-X'.

La portion tubulaire 1 délimite partiellement un trou borgne 4. Ce dernier se prolonge dans la couronne radiale 2, avant d'atteindre une paroi radiale d'extrémité 5 qui définit son fond 6. A partir de son embouchure 7, le trou borgne 4 comporte successivement un tronçon cylindrique 8, puis un tronçon de raccordement ou convergent tronconique 9, et enfin un tronçon globalement cylindrique 10. Des cannelures intérieures d'accouplement 11, régulièrement réparties autour de l'axe de rotation X-X', sont ménagées dans le pignon planétaire P et s'étendent axialement sur la majeure partie de la longueur du tronçon 10, dans lequel la portion d'extrémité cannelée d'un axe de transmission non représenté est destinée à venir se loger, à jeu réduit, et à s'accoupler au pignon planétaire P. Aussi, le tronçon 10 et la denture circulaire 3 sont co-axiaux et centrés sur l'axe de rotation X-X'.

Le pignon planétaire P est une pièce d'un seul tenant, forgée. Les cannelures 11 sont également forgées. Plus précisément, elles sont filées, c'est-à-dire obtenues à l'aide d'une filière interne non représentée, enfoncée axialement dans le tronçon 10, vers le fond 6, puis retirée dans l'autre sens. Cette filière interne, qui comprend autant de dents radiales qu'il y a de cannelures 11 à réaliser, effectue donc un aller-retour, ce qui rend compatible le filage des cannelures 11 avec la présence de la paroi radiale 5 formant obturateur. Tel n'est pas le cas de l'usage connu d'une broche pour creuser par usinage les cannelures du pignon planétaire de l'art antérieur, décrit dans l'introduction.

De plus, les cannelures filées sont plus robustes que celles obtenues par usinage.

Parmi les avantages de l'invention, on notera que le pignon planétaire P qui vient d'être décrit est plus simple que le pignon planétaire de l'art antérieur, décrit dans l'introduction. En particulier, il ne comporte qu'une seule pièce à fabriquer, gérer et stocker, alors que le pignon planétaire de l'art antérieur en possède au moins une de plus, à savoir l'obturateur rapporté.

En outre, l'étanchéité de l'obturation du passage dans le pignon planétaire de l'art antérieur n'est obtenue qu'au prix d'un usinage très précis de la portion de ce passage dans laquelle est monté l'obturateur rapporté. De surcroît, cette partie a une forme particulière, destinée à retenir l'obturateur. L'invention élimine toutes ces contraintes, ainsi qu'une autre, à savoir la nécessité d'effectuer un contrôle de l'étanchéité de chaque pignon planétaire produit.

## Revendications

1. Pignon planétaire de différentiel, qui est pourvu de cannelures intérieures (11) d'accouplement d'un arbre de transmission, qui comprend une denture circulaire (3), qui est forgé d'un seul tenant et qui délimite un trou borgne et rectiligne (4) pour le logement et l'accouplement d'une portion d'extrémité de l'arbre de transmission, la denture circulaire (3) et le trou borgne (4) étant coaxiaux et centrés sur un axe (X-X') de rotation du pignon planétaire, **caractérisé en ce que** les cannelures (11) sont filées.

2. Pignon planétaire selon la revendication 1, **caractérisé en ce qu'**une paroi radiale d'extrémité (5), d'un seul tenant avec ledit pignon planétaire, définit le fond (6) du trou borgne (4).

3. Pignon planétaire selon l'une quelconque des revendications précédentes, **caractérisé en ce qu'**il comporte une couronne radiale (2) et une portion tubulaire (1), qui délimite au moins une partie dudit trou borgne (4), la couronne (2) portant la denture (3) et prolongeant la portion tubulaire (1).

4. Pignon planétaire selon l'une quelconque des revendications précédentes, **caractérisé en ce que** l'embouchure (7) du trou borgne (4) et la denture circulaire (3) sont localisées chacune à l'une de deux extrémités axialement opposées du pignon planétaire.

5. Procédé de fabrication d'un pignon planétaire selon l'une quelconque des revendications précédentes, **caractérisé en ce qu'**il comporte une étape dans laquelle on forme les cannelures (11) en engageant axialement dans ledit trou borgne (4) une filière interne, comprenant autant de dents radiales qu'il y a de cannelures (11) à réaliser.

## Patentansprüche

1. Planetenrad für ein Differential, das mit inneren Keilnuten (11) zum Ankoppeln einer Antriebswelle versehen ist, das eine kreisförmige Verzahnung (3) aufweist, das in einem Stück geschmiedet ist und das ein geradliniges Sackloch (4) zum Aufnehmen und Ankoppeln eines Endbereiches der Antriebswelle begrenzt, wobei die kreisförmige Verzahnung (3) und das Sackloch (4) koaxial und in Bezug auf eine Drehachse (X-X') des Planetenrades zentriert ausgebildet sind,
**dadurch gekennzeichnet,**
**daß** die Keilnuten (11) extrudiert sind.

2. Planetenrad nach Anspruch 1,
**dadurch gekennzeichnet,**
**daß** eine mit dem Planetenrad einstückige radiale Endwand (5) den Boden (6) des Sackloches (4) bildet.

3. Planetenrad nach einem der vorhergehenden Ansprüche,
**dadurch gekennzeichnet,**
**daß** es einen radialen Kranz (2) sowie einen rohrförmigen Bereich (1) aufweist, der zumindest einen Teil des Sackloches (4) begrenzt, wobei der Kranz (2) die Verzahnung (3) trägt und den rohrförmigen Bereich (1) verlängert.

4. Planetenrad nach einem der vorhergehenden Ansprüche,
**dadurch gekennzeichnet,**
**daß** sich die Öffnung (7) des Sackloches (4) und die kreisförmige Verzahnung (3) jeweils an einem von zwei axial gegenüberliegenden Enden des Planetenrades befinden.

5. Verfahren zur Herstellung eines Planetenrades nach einem der vorhergehenden Ansprüche,
**dadurch gekennzeichnet,**
**daß** es einen Schritt aufweist, bei dem die Keilnuten (11) ausgebildet werden, indem ein Preßstempel, der ebenso viele radiale Zähne aufweist, wie Keilnuten (11) herzustellen sind, in Axialrichtung in das Sackloch (4) eingetrieben wird.

## Claims

1. Differential side gear, which is provided with inner grooves (11) for coupling of a drive shaft, which comprises circular toothing (3), which is forged in a single piece, and delimits a straight blind hole (4) for accommodation and coupling of an end portion of the drive shaft, the circular toothing (3) and the blind hole (4) being coaxial and centred on an axis (X-X') of rotation of the side gear, **characterised in that** the grooves (11) are extruded.

2. Side gear according to claim 1, **characterised in that** a radial end wall (5) which is integral with the said side gear defines the base (6) of the blind hole (4).

3. Side gear according to either of the preceding claims, **characterised in that** it comprises a radial ring (2) and a tubular portion (1) which delimits at least part of the said blind hole (4), the ring (2) supporting the toothing (3) and extending the tubular portion (1).

4. Side gear according to any one of the preceding claims, **characterised in that** the outlet (7) of the blind hole (4) and the circular toothing (3) are each located at one of two axially opposite ends of the side gear.

5. Method for production of a side gear according to any one of the preceding claims, **characterised in that** it comprises a step wherein the grooves (11) are formed by engaging axially in the said blind hole (4) an inner die, which comprises as many radial teeth as there are grooves (11) to be produced.
